Europäisches Patentamt

European Patent Office

Office européen des brevets

(11) Publication number: **0 444 860 B1**

# EUROPEAN PATENT SPECIFICATION

(45) Date of publication of patent specification: **16.08.95** (51) Int. Cl.⁶: **C10G 11/18, B01J 8/18**

(21) Application number: **91301511.1**

(22) Date of filing: **26.02.91**

(54) **A fluid catalytic cracking unit and process comprising an improved feed injection system.**

(30) Priority: **27.02.90 US 486035**

(43) Date of publication of application:
**04.09.91 Bulletin 91/36**

(45) Publication of the grant of the patent:
**16.08.95 Bulletin 95/33**

(84) Designated Contracting States:
**BE DE ES FR GB GR IT NL**

(56) References cited:
**EP-A- 0 208 609**
**EP-A- 0 227 864**
**US-A- 4 434 049**
**US-A- 4 575 414**
**US-A- 4 793 913**

(73) Proprietor: **EXXON RESEARCH AND ENGI-NEERING COMPANY**
**P.O.Box 390,**
**180 Park Avenue**
**Florham Park,**
**New Jersey 07932-0390 (US)**

(72) Inventor: **Sabottke, Craig Young**
**36, Skyline Drive**
**Morristown, NJ (US)**

(74) Representative: **Somers, Harold Arnold et al**
**ESSO Engineering (Europe) Ltd.**
**Patents & Licences**
**Mailpoint 72**
**Esso House**
**Ermyn Way**
**Leatherhead,**
**Surrey KT22 8XE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

BACKGROUND OF THE INVENTION

In the petroleum refining industry, the fluidized catalytic cracking of hydrocarbons is well known and may be accomplished in a variety of processes which employ fluidized solid techniques. Normally in such processes, suitably preheated, relatively high molecular weight hydrocarbon liquids and/or vapors are contacted with hot, finely-divided, solid catalyst particles either in a fluidized bed reaction zone or in an elongated riser reaction zone, and maintained at an elevated temperature in a fluidized state for a period of time sufficient to effect the desired degree of cracking to lower molecular weight hydrocarbons typical of those present in motor gasolines and distillate fuels.

During the cracking reaction, coke is deposited on the catalyst particles in the reaction zone thereby reducing the activity of the catalyst for cracking and the selectivity of the catalyst for producing gasoline blending stock. In order to restore a portion, preferably a major portion, of the activity to the coke-contaminated or spent catalyst, the catalyst is transferred from the reaction zone into a regeneration zone. Typical regeneration zones comprise large vertical cylindrical vessels wherein the spent catalyst is maintained as a fluidized bed by the upward passage of an oxygen-containing regeneration gas, such as air, under conditions to burn at least a portion, preferably a major portion, of the coke from the catalyst. The regenerated catalyst is subsequently withdrawn from the regeneration zone and reintroduced into the reaction zone for reaction with additional hydrocarbon feed.

In a fluid catalytic cracking unit, commercial practice has been to employ fixed throat feed injectors. For example, Dean et al., U.S. Patent 4,434,049 and Skraba, U.S. Patent 4,575,414 disclose fixed throat atomizing spray nozzles. Chesmore et al., Japanese Kokai 59-145287 disclose a fixed throat feed injector with spiral momentum. Such fixed throat feed injectors are usually designed on a forecast basis and optimized for a certain feed quality. In the actual plant operation, however, feed quality is usually different from the forecast basis, since business objectives change with time. For these reasons, most conventional FCCUs change their fixed throat feed injectors on a two to three year cycle which roughly corresponds to the FCCU turnaround schedule.

Furthermore, it is current practice with FCCU operations to practice multivariable constraint control to maximize refinery profits on a continuous basis. An important process variable is feed quality and flow rate to the FCCU feed injectors.

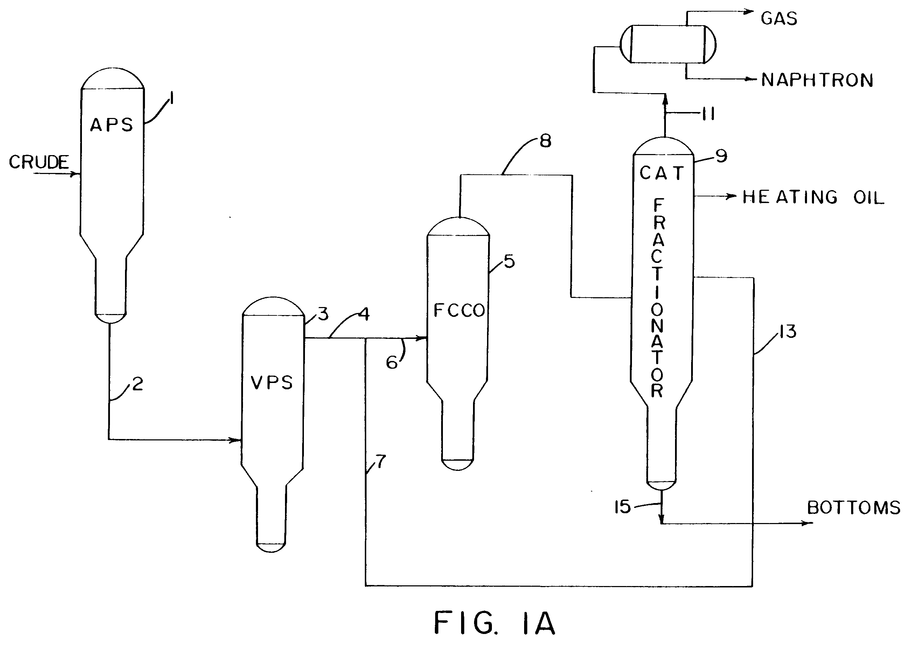

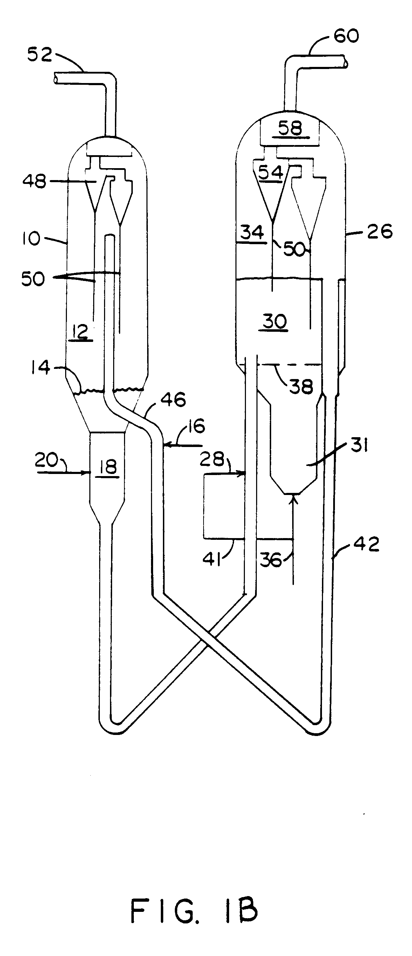

The total feed to a catalytic cracking unit (FCCU) typically comprises a combination of fresh feed and recycle feed. The recycle feed in turn typically comprises heavy catalytic cycle oil (HCCO) and fractionator bottoms (slurry). In FIG. 1, a typical catalytic cracking operation is shown. A crude source is distilled in an atmospheric pipestill 1 to produce a reduced crude in line 2, which reduced crude is distilled in a vacuum pipestill 3 to produce a vacuum gas oil (VGO) in line 4. The feed in line 4 is admixed with recycled feed in line 7 to produce a combined feed 6. The combined feed 6 leads to one or more injectors which introduce the feed into the FCCU reactor 5. The reactor product exits the reactor 5 via line 8 and enters fractionator 9 which yields a top fraction 11 and sidestream 13 which is recycled as feed in the aforementioned line 7 to reactor 5. A portion of the bottoms in line 15 is also recycled via a bypass 17 for admixture in the recycle stream 7.

The total feed to the FCCU reactor in actual operation is usually variable for a number of reasons. For one, it is typical in a refinery for the crude mix to change. Consequently, the FCCU fresh feed (for example, the vacuum gas oil or VGO yield) will vary. Another reason the total feed to the FCCU reactor will change is that upstream process changes will change the quality and quantity of the FCCU fresh feed. For example, the vacuum pipe still (VPS) cut point may change and the ratio of VGO (vacuum gas oil) to VR (vacuum residua) may change. This may be a consequence of winter versus summer sales requirements. Other upstream process changes include changes in a hydrotreating unit, for example a change in the catalyst used or the severity of conditions.

Another cause of total feed variation to an FCCU is a change in imported fresh feed. Typically, a refinery may take advantage of a number of options for purchasing various distillates from a supply external to the refinery.

Variations in fresh feed to an FCCU will cause a secondary variation in the recycle feed, which is typically combined with the fresh feed. Ultimately, this may cause a significant variation or fluctuation in the total feed flow into the feed injectors.

For the foregoing reasons, significant and disruptive changes in the total feed to an FCCU reactor can typically occur on a week to week basis.

2

Generally, a change in the flow of feed to an FCCU produces a change in pressure across the pump leading to the feed injectors and produces a change in pressure across the feed injector nozzle, the latter changing the atomization. Flow controllers (FLICs) in the line to the injectors typically compensate to some extent for changing pressures, but they are gross controllers and do not provide optimum pressure control. Even if the pressure stays the same in most of the line, a constant flow area in a fixed nozzle injector will cause variations in pressure change across the nozzle and the associated atomization. Typically, a pump head will change in a range of about 10 psi (for example, 60 ± 5). A nozzle section ΔP will typically vary from about 20 to 40 psi.

If a big enough change in total feed occurs, some of the injector nozzles may be opened or closed to reduce fluctuations. In response to higher total feed rates, it is possible to manipulate ΔP across the nozzle by, for example, blocking flow to four out of eight feed injectors. This approach, however, causes step changes rather than a continuum change, resulting in inefficiencies. There is therefore a need for better maximization of an FCCU operation in a changing economic environment. During the course of a two to three year plant run, there is considerable room for optimization of feed injector atomization with available feed pump head and feed system hydraulic capacity.

## BRIEF DESCRIPTION OF THE INVENTION

It has now been found that atomization of the feed into an FCCU can be optimized, for example, by use of a variable throat feed injector. In conjunction with appropriate control instruments, it is possible to obtain an additional degree of freedom to the control and optimization of an FCCU process and the overall refinery operation. Further, by means of a new kind of feed injector, a preselected optimal feed liquid droplet size, and/or drop size distribution, and/or spray pattern can be maintained as desired.

## BRIEF DESCRIPTION OF THE DRAWINGS

The process and apparatus of the invention will be more clearly understood upon reference to the detailed discussion below in conjunction with the drawings wherein:

FIG. 1A is a flow diagram of a typical prior art catalytic cracking process;

FIG. 1B schematically illustrates an embodiment of a fluid catalytic cracking unit (FCCU), representative of the prior art, to which the present invention is applicable;

FIG. 2 is a flow diagram of the catalytic cracking reactor portion of the prior art and further depicts a feed flow control system according to the present invention;

FIG. 3 is a schematic diagram of a variable throat FCCU feed injector assembly according to one aspect of the present invention;

FIG. 4 is a schematic diagram, in greater detail, of the nozzle atomization adjustment assembly portion of the feed injector in FIG. 3;

FIG. 5 is a front view of the premixer portion of the nozzle atomization adjustment assembly of FIG. 4;

FIG. 6 shows in greater detail a nozzle atomization adjustment assembly while positioned within a variable throat converging fan nozzle;

FIG. 7 is a typical graph of percent stroke versus flow area for the nozzle portion of a variable throat converging fan feed injector of the type depicted in FIG. 3;

FIG. 8 is a schematic diagram of the feed injector depicted in FIG. 2 shown attached to a wall of the riser portion of the FCCU reactor;

FIG. 9 shows a graph of a typical feed injector droplet size distribution and droplet velocity distribution;

FIG. 10 is a graph showing, for a typical feed injector of the present invention, the nozzle coefficient of resistance versus a specified variable geometric parameter; and

FIG. 11 (parts A and B) is a flow chart illustrating a computer application program for carrying out a preferred embodiment of the invention according to Example 2 below.

## DETAILED DESCRIPTION OF THE INVENTION

The invention is directed to a process for controlling an FCCU by optimizing the atomization of the feed introduced into a catalytic cracking zone. In a preferred embodiment, to be described in detail below, a plurality of feed injectors, each comprising a variable throat section thereof, are employed to optimize the feed atomization.

In this description, the term "atomization", with respect to the effluent from a feed injector, is meant to encompass the following atomization characteristics: the average or mean feed droplet size, droplet size distribution, and spray pattern. Spray pattern refers to spray angles and shape, for example, cone, fan, etc.

In general, a degree of feed atomization characterized by a smaller average droplet size, narrow droplet size distribution, and well dispersed spray pattern will result in less coke and less dry gas, thereby tending to maximize liquid yields. To maximize mogas, atomization of the feed into relatively fine droplets may be selected to match the size and distribution of the catalyst particles employed in the FCCU. On the other hand, a larger average droplet size and wide distribution, including a portion of droplets significantly larger in size than average, and a spray pattern not well dispersed, can result in a significant increase in coke formation. The selected degree of atomization will depend on the process objectives. For example, in order to maximize LPG (liquid propane gas), a fine droplet size may not be ideal. It is believed that droplet size and distribution are dominant factors in achieving yield objectives. Data has also shown that two different spray patterns may have drastically different effects on yields.

The present process is applicable to feeds that are either newtonian or non-newtonian fluids. In general, a VGO (vacuum gas oil) feed to a FCCU process behaves as a newtonian fluid. Although high boiling resid feed components and cracked recycle stocks which can be part of the total feed stream sent to the feed injectors may exhibit some non-newtonian characteristics, the assumption that the feed generally behaves as a newtonian fluid is considered reasonable and adequate insofar as equipment design is concerned.

An oil-only feed may be "pressure atomized" and/or sprayed into the FCCU reactor. However, in the preferred operating mode, a lower molecular weight media is injected into the oil feed. Suitable media include hydrogen, steam, nitrogen, FCC off-gas, and $C_6$- hydrocarbons. Most preferably, a steam/oil mixture is used as the feed stream to the FCCU reactor. In a preferred embodiment, this steam/oil mixture is passed through a variable throat feed injector nozzle. The ratio of steam/oil can be adjusted during operations based on changes in oil feed type and properties. The amount of steam in the mixture influences the density of the mixture and will therefore have an impact on atomization. General commercial practice, suitable with the present process, is to use about 1.0 wt% steam for light feed types and about 3.0 to 5.0 wt% steam for heavy, more viscous feed types.

The use of a low molecular weight media in FCCU feed injectors helps in the vaporization of the liquid droplets by reducing the oil partial pressure. A simple analogy can be drawn to operation of a vacuum pipestill flash zone. At a fixed pressure and temperature, increasing the steam/oil ratio reduces the oil partial pressure and causes more higher boiling oil components to be vaporized.

In a fluid catalytic cracking (FCC) process, the initial contacting of oil feed with regenerated catalyst and how this contacting is carried out influences the reactor product yields and qualities and the associated endothermic heat of cracking required. Initial contacting can be viewed as a localized zone (control volume) in the reactor system, typically consisting of a steam/oil/catalyst mixture (emulsion). By adjusting the steam/oil ratio and atomization (oil liquid droplet size, droplet size distribution, and/or spray pattern), the reaction pathway can be controlled or influenced according to the present invention. It is desirable to optimize the atomization for a given set of FCCU inputs or outputs.

A good indicator or measure of the state of atomization of the feed handled is the pressure drop $\Delta P$ across the nozzle of the feed injector. A parameter related to nozzle pressure drop is used as a measure of atomization. For example, pressure drop is directly related to nozzle cross-sectional area in the preferred feed injectors of the present invention. The nozzle resistance coefficient, defined below in the examples, is a good measure of atomization. Data relating nozzle droplet size, droplet size distribution and spray pattern to nozzle resistance coefficient or $\Delta P$ can be obtained experimentally, as detailed below in the examples.

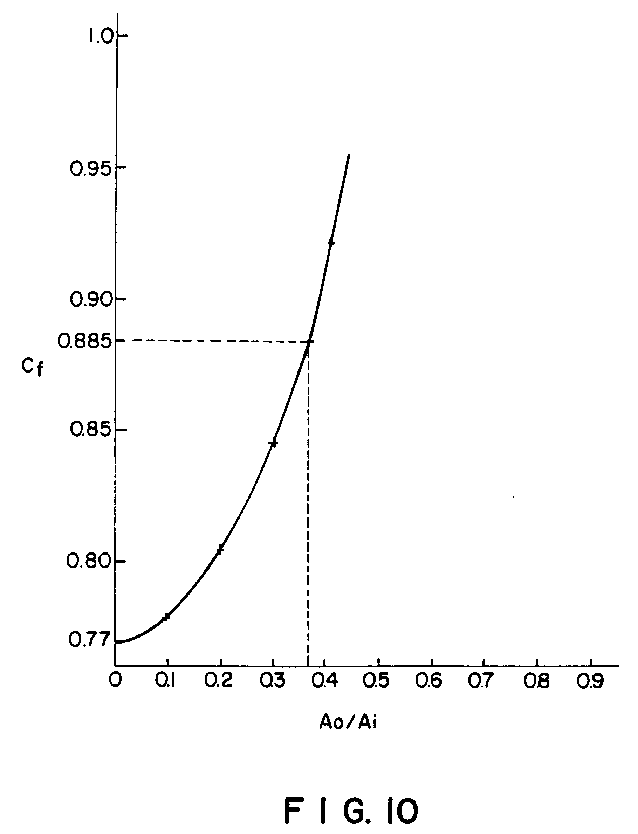

Correlations can also serve as a basis for making estimates of the performance of a particular variable throat feed injector design. Nozzle geometry can effect spray pattern, liquid droplet size and droplet size distribution, and is therefore reflected in the nozzle resistance coefficient. For example, FIG. 10 presents a nozzle resistance coefficient curve for one kind of variable throat feed injector.

Plant FCCU data can be collected from a number of similar commercial units to measure catalyst cracking changes associated with feed injector changes. For example, nozzle $\Delta P$ or other measure of atomization can be related to yield and quality shifts in an FCCU reactor. Preferably, each particular FCCU can be tested to empirically develop such correlations. Process models may also be used to establish these correlations. An FCCU computer simulation model can be used to characterize the yield shifts on a "unit factor" basis.

As mentioned earlier, the desired degree of atomization may depend on the process or operating objectives. For example, atomization of the feed into a catalytic cracking zone can be selected to compensate for changing product yield and/or quality objectives in a multivariable constraint control or LP control or non-linear LP control environment. An example of this would be naphtha product liquid yield and research octane quality. As product values change in the marketplace, the reactor yields can be adjusted to optimize the economic benefit from the FCCU process on a refinery's operation. This is extremely important at refineries where on-stream blending is conducted.

The degree of atomization may be used as a control variable, changing in real time. For example, both yields and temperatures can be varied by varying the degree of atomization.

The nozzle flow area and atomization can be adjusted to compensate for changing upstream flow rates or changing upstream chemical or physical properties. The atomization can also be adjusted to compensate for normal equipment wear, or to compensate for nozzle coking/plugging, which can cause poor atomization and adverse yield and quality shifts.

The preferred means of controlling the feed atomization is by monitoring the injector nozzle pressure drop $\Delta P$, for example, by means of a pressure transducer or controller (PdRC), and sending a signal based thereon to an actuator associated with a variable (movable) throat feed injector. Suitably, a PdRC can be operated in a simple single control loop mode holding a target nozzle pressure drop. Alternatively, the PdRC can be combined in a more complex control configuration.

In a simple single control loop mode, a PdRC target pressure drop is set to achieve a desired feed atomization. The unit operator would monitor, in an "open loop" control mode, the effect that various PdRC set points have on the FCCU process yields and qualities. The PdRC set point would be selected based on plant response trends to optimize the feed atomization (including spray pattern, droplet size and droplet size distribution).

An application software package can be developed to assist the PdRC in control of the variable (movable) throat feed injectors. Each actuator may have a position indicator which can be field calibrated for each injector. To minimize investment, a single PdRC may be installed. Instrument piping manifolds can be provided to allow the PdRC to be coupled with any of the injectors. A more expensive configuration would involve individual PdRC instruments for each variable (movable) throat feed injector.

Field calibration curves can be constructed for each variable (movable) throat feed injector to define the relationship between nozzle $\Delta P$ and nozzle flow area. Ideally, the same relationship should be determined for each nozzle; however, in actual practice, unit specific piping layout may result in some slight difference among various nozzles. Based on field data, one of the variable (movable) throat nozzles can be selected as the reference sensing nozzle. The PdRC will monitor the pressure drop of this nozzle and send control movement signals to the application program. Based on the field calibration data for each individual variable (movable) throat feed injector and the PdRC signal, the application program will send a signal to the individual actuators/positioners to change the nozzle flow area as required. To avoid unnecessary actuator hunting, some dead band provision may be provided. Also, a hierarchy may be provided in the application program so that individual nozzles are stroked in a sequential and specific geometric pattern. Two opposing nozzles may be stroked as a pair.

Application of variable throat feed injectors to an FCCU process allows for new control configurations, for example, wherein total feed flow control to one or more feed injectors is cascaded to the feed injector nozzle. Spare control valve $\Delta P$ and feed pump $\Delta P$ available in the feed circuit is transferred to the feed injector nozzle to optimize nozzle $\Delta P$ and improve atomization and/or spray pattern.

A process control scheme may involve a single level or stage of feed injectors, or multiple levels (multistage) feed injectors, for example, uniformly distributed around the circumference of an FCCU reactor riser. For a typical reactor configuration, the total feed, comprising preheated fresh feed plus cracked recycle stocks from a downstream FCCU fractionator, is typically combined upstream of the feed injector nozzles. This total feed stream is typically combined with riser feed injection steam and sent to the feed injector nozzles.

Because of existing FCC unit layouts, it may be prohibitively expensive to add additional feed injector nozzles of the variable type employed in the present invention to an existing first (bottom) level of feed injectors, since there may be a number of potential structural interference problems associated with this level of feed injectors in an existing unit. In such a case, additional levels of variable throat feed injectors, according to the present invention, may be provided.

It is not uncommon to practice staged and/or segregated contacting of feeds to an FCCU. For example, an FCCU having two risers has the capability to practice segregated feed contacting. As an example of various embodiments to which the present process is applicable, a particular FCCU, for example having levels Nos. 1, 2, and 3 on a vertical axis of its riser, may have the following processing options:

a. Total feed to level No. 1 (Total feed can be comprised of any or all of the following: virgin or processed or pretreated vacuum gas oil, imported vacuum gas oil, imported resid, recycle streams from the FCCU fractionator, or recycled streams from other refinery process units).

b. Virgin or processed or pretreated vacuum gas oil (VGO) to level No. 1 and FCCU recycle streams to level No. 2.

c. Total feed to level No. 2 (reduced reactor residence time mode).

d. Virgin or processed or pretreated vacuum gas oil (VGO) to level No. 1, HCCO (heavy catalytic cycle oil) recycle to level No. 2, and bottoms recycle to level No. 3.

e. Virgin or processed or pretreated vacuum gas oil (VGO) to level No. 2 and FCCU recycle streams to level No. 3.

f. Virgin or processed or pretreated vacuum gas oil (VGO) feed and recycle streams to level No. 1 and imported (resid) feed to level No. 2.

g. Virgin or processed or pretreated vacuum gas oil (VGO) to level No. 1 and recycle streams plus imported (resid) feed to level No. 2.

h. Virgin or processed or pretreated vacuum gas oil (VGO) to level No. 1, recycle streams to level No. 2 and imported (resid) feed to level No. 3.

i. Virgin or processed or pretreated vacuum gas oil (VGO) and recycle streams to level No. 2 and imported (resid) feed to level No. 3.

In a preferred embodiment of a staged/segregated FCCU reactor system, the best quality feed is reacted with the best quality, most active catalyst first. In subsequent stages, preferably lower quality feeds are introduced into the reactor system.

In a single stage reaction system, the preferred location of a level or ring of variable throat feed injector nozzles is at the inlet to the reactor riser (sometimes also called the transferline reactor). Suitably, a number of nozzles are uniformly distributed around the perimeter of the reactor riser to insure good catalyst/oil contacting and mixing.

In a multistage reactor system, wherein an existing unit is revamped in order to practice the present process, a preferred operating mode is as follows. Total FCCU feed components can be classified into two broad categories: good (e.g., virgin) feed and poor (e.g., cracked recycle) feed. Typically, a virgin VGO feed is introduced to an existing first level of feed injectors, at the inlet to the reactor riser, which feed injectors can be either fixed throat or variable throat feed injectors. Typically, roughly 80% of the total feed is good, e.g., VGO. This good feed component of the total feed is contacted and reacted with the regenerated catalyst at a slightly higher catalyst/oil ratio in the reaction zone between the first and second levels of feed injectors.

The HCCO (heavy catalytic cycle oil) and bottoms recycle streams from the FCCU fractionator which comprise the so-called poor feed typically represents the other 20% of the total feed. They may be injected through variable throat feed injector nozzles at a second and optional third level of feed injectors. The HCO and bottoms recycle streams are typically very aromatic, refractory type materials which have poorer yield selectivities compared to fresh feed. By segregating this material and staging the reaction system, a more attractive product yield distribution is achieved and additional process flexibility is gained.

Segregation of the feed components and staging of the reaction system into two zones or stages achieves an estimated 10% reduction in coke. This translates into a similar increase in capacity for an air-limited unit. It is estimated that application of variable throat feed injectors to a second level of feed injectors can achieve an additional reduction in coke. This translates into additional increased capacity for an air-limited unit.

Because of the fluid property and chemistry differences between recycle streams and fresh feed streams, use of variable (movable) throat feed injectors on the recycle streams provides additional process flexibility. Recycle stream liquid droplet size, droplet size distribution and/or spray pattern can be optimized by variable (movable) throat feed injector nozzles. Because of feed segregation, the recycle streams can be atomized into the reactor system at the conditions that are the most optimal for these feed components. It is feasible that the first level feed will be optimized at a different state of atomization than the second level feed to the reactor, because of the different hydrocarbon chemistries involved. The basis for these different optimizations will be unit specific based on operating objectives and prevailing economics.

As an alternative case, segregated feeds can be processed at a single level of feed injectors using separate nozzles.

Variable throat feed injectors which may be employed in the present invention can be constructed by appropriate modification of a conventional fixed throat injector, for example, by adding a movable throat insert as detailed below. Types of fixed throat nozzle designs are numerous and include, but not limited to, converging-diverging, converging, converging-diverging fan, and spiral type. Extension of this invention to other nozzle geometries and other fixed throat nozzle designs will be appreciated by those skilled in the art. Any feed injector system which is capable of varying the feed atomization in a controllable manner can be employed in the process of the present invention.

Having thus described the invention in general terms, reference is now made to FIG. 1B which illustrates a typical fluid catalytic cracking system. Application of the subject invention is not limited to this type of system and is equally applicable to other type cracking systems and to other zone configurations and positions. Various conventional items such as valves, pumps, compressors, steam lines, instrumentation and other process equipment and control means have been omitted from the figures for the sake of simplicity. Variations obvious to those having ordinary skill in the art of catalyst cracking processes are included within the broad scope of the present invention.

Referring now to FIG. 1B, there is shown a vertically arranged cylindrical reaction zone 10 containing a transfer line reactor 12 of catalyst in which a hydrocarbon feedstock introduced at line 16 is undergoing catalytic cracking. Hydrocarbon feedstocks that can be suitably employed in a fluid catalytic cracking process include naphthas, light gas oils, heavy gas oils, wide-cut gas oils, vacuum gas oils, kerosenes, decanted oils, residual fractions, reduced crude oils, cycle oils derived from any of these, as well as suitable fractions derived from shale oil kerogen, tar sands bitumen processing, synthetic oils, coal hydrogenation, and the like. Such feedstocks may be employed singly, separately in parallel reaction zones, or in any desired combination. Hydrocarbon gas and vapors passing through the transfer line reactor 12 maintain the catalyst in a turbulent fluidized condition having the appearance of a boiling liquid.

In general, any commercial hydrocarbon conversion catalyst designed for high thermal stability could be suitably employed in the present invention. Such catalysts include those containing silica and/or alumina such as well known zeolites.

In reaction zone 10, the cracking catalyst becomes spent during contact with the hydrocarbon feedstock due to the deposition of coke thereon. Thus, the terms "spent" or "coke-contaminated" catalyst as used herein generally refer to catalyst which has passed through a reaction zone and which contains a sufficient quantity of coke thereon to cause significant activity loss, thereby requiring regeneration. Typically, spent catalyst coke contents vary from about 0.5 to about 1.5 wt%.

Prior to actual regeneration, the spent catalyst is usually passed from the reaction zone into a stripping zone 18, below a fluidized bed level indicated at 14, and contacted therein with a stripping gas, which is introduced into the lower portion of zone 18 via line 20. The stripping gas, which is usually introduced at a pressure of from about 10 to about 50 psig, serves to remove most of the volatile hydrocarbons from the spent catalyst. A preferred stripping gas is steam, although nitrogen, other inert gases or flue gas may be employed. Normally, the stripping zone is maintained at essentially the same temperature as the reaction zone, i.e., from about 850°F to about 1100°F.

Stripped spent catalyst from which most of the volatile hydrocarbons have been stripped therefrom is then passed from the bottom of stripping zone 18, through a spent catalyst transfer line, such as J-bend 22 and interconnected vertical riser 24, which extends into the lower portion of a regeneration zone 26.

Riser 24 is shown entering regeneration zone 26 off-center to avoid interference with the auxiliary heating air from section 31 of the regeneration zone. In the embodiment shown, only one riser 24 is utilized. It is, however, within the contemplation of the subject invention that a plurality of risers may be used.

Air is added to riser 24 through line 41 and line 28 in an amount sufficient to reduce the density of the catalyst flowing therein, thus causing the catalyst to flow upward into the regeneration zone 26 by simple hydraulic balance.

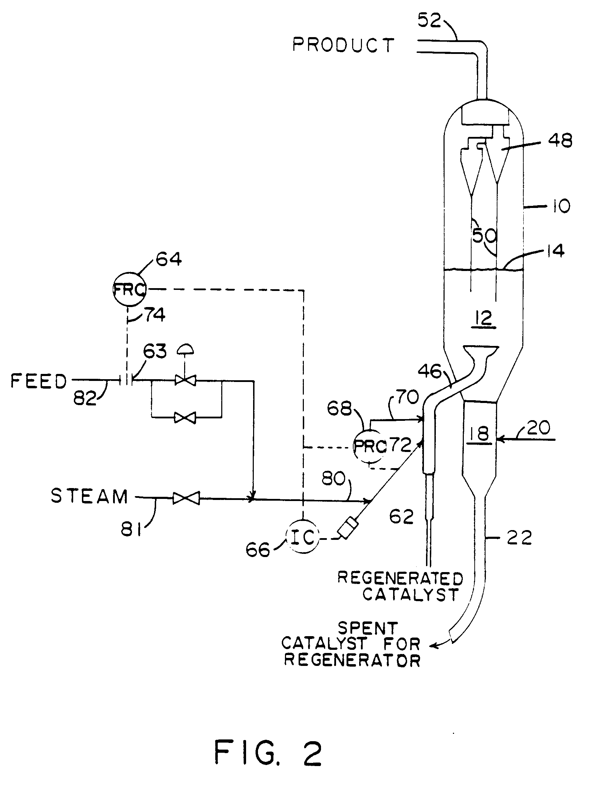

In the particular configuration shown in FIG. 1B, the regeneration zone is a separate vessel (arranged at approximately the same level as reaction zone 10) containing a dense phase catalyst bed 30 having a level indicated at 32, which is undergoing regeneration to burn of coke deposits formed in the reaction zone during the cracking reaction, above which is a dilute catalyst phase 34. An oxygen-containing regeneration gas enters the lower portion of regeneration zone 26 via line 36 and passes up through a grid 38 and the dense phase catalyst bed 30, maintaining said bed in a turbulent fluidized condition similar to that present in reaction zone 10. As will be discussed in more detail with respect to FIG. 2 hereinbelow, the present invention resides in an improved system of process control involving the introduction of feed into a cracking zone which, in this particular design, is located within riser 46.

Regenerated catalyst from the dense phase catalyst bed 30 in the regeneration zone 26 flows downward through standpipe 42 and passes through a J-bend into the reaction zone 10 by way of the transfer line 46 which joins the J-bend at the level of the oil injection line 16 above the J-bend. By regenerated catalyst is meant catalyst leaving the regeneration zone which has contacted an oxygen-containing gas causing at least a portion, preferably a substantial portion, of the coke present on the catalyst to be removed. More specifically, the carbon content of the regenerated catalyst can vary any where from about 0.01 to about 0.2 wt%, but preferably is from about 0.01 to about 0.1.

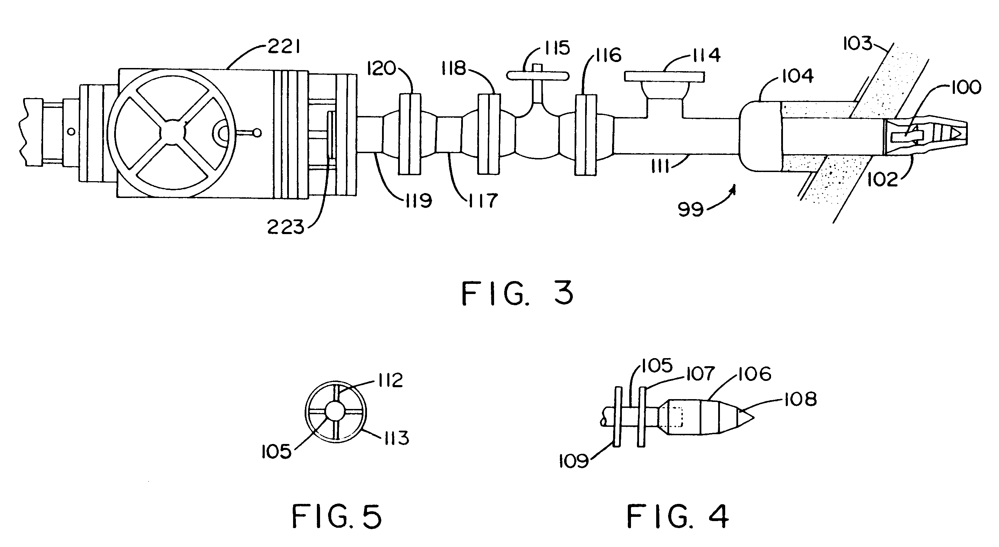

The hydrocarbon feedstock for the cracking process is injected into line 46 through line 16 via special feed injectors, to be described in detail below with reference to FIG. 3, to form an oil and catalyst mixture which is passed into the transfer line reactor 12 within the reaction zone 10. Product vapors containing entrained catalyst particles pass overhead from the transfer line reactor 12 into a gas-solid separation means 48 wherein the entrained catalyst particles are separated therefrom and returned through diplegs 50 leading back into the stripping zone 18. The product vapors are then conveyed through line 52 into the product recovery system.

In regeneration zone 26, flue gases formed during regeneration of the spent catalyst can pass from the dense phase catalyst bed 30 into the dilute catalyst phase 34 along with entrained catalyst particles. The catalyst particles are separated from the flue gas by a suitable gas-solid separation means 54 and returned to the dense phase catalyst bed 30 via diplegs 56. The substantially catalyst-free flue gas then passes into a plenum chamber 58 prior to discharge from the regeneration zone 26 through line 60.

It will be readily appreciated by those skilled in the art that the present invention may be applied beneficially to any type of fluid cat cracking unit with little or no modifications and without limitations as to the spatial arrangement of the reaction, stripping, and regeneration zones thereof.

A better understanding of how the present invention may be applied to control the flow of feed to the catalytic cracking unit may be obtained by reference to FIG. 2, which shows the reaction portion of the FCCU in isolation from the regenerator portion and in conjunction with certain process control instrumentation and signals. The control system and equipment are in itself conventional, as will be readily appreciated by those skilled in the art and, therefore, are shown only schematically. The numbers in FIG. 2 which are less than or equal to 52 are the same as the numbers in FIG. 1B and correspond to the same parts.

Although schematically showing the feed injectors by a single line 62 in FIG. 2, this embodiment actually employs a plurality of feed injectors. In three dimensions, there are typically three or more (3 to 20) feed injectors horizontally spaced, on the same level, around a circumference of the riser. For flow control purposes, a flow controller 64 can be cascaded to a feed injector controller 66. Alternatively, the flow controller 64 can be cascaded to the pressure controller 68, which in turn is cascaded to the same feed injector controller 66 to maintain a target level of atomization.

As evident in FIG. 2 and the above detailed description of the invention, the pressure controller 68, measures the pressure drop across a portion of the feed injector, suitably the difference between the pressure, as measured by line 70, within the riser 46 just outside the nozzle tip of the feed injector, and the pressure, as measured by line 72, at a point within the injector just prior to the nozzle throat section that is varied, as explained below with respect to FIG. 3. The pressure controller includes a comparator for measuring the difference with a target set point, typically 276 kPa (40 psi).

A flow monitoring device 63 measures in real time, the flow rate of feed in the conduit leading to the feed injectors, the signal based thereon being sent via line 74. An acoustic measuring device can be employed for this purpose. When alternatively or additionally monitoring the properties of the feed, conventional analytical instrumentation can be employed. For example, the API gravity or refractive index may be measured. Feed composition and/or properties may be measured with infrared, ultraviolet, or mass spectroscopy. High pressure liquid chromatography may be employed to separate components of the feed. The controller 64 suitably includes a comparator to compare the measured flow rate, typically in units of kilobarrels per day (kB/D), to a set point. A signal based on the calculated flow rate or difference from set point can, as mentioned above, be cascaded either directly to the injector controller 66 or in a layered hierarchy to the pressure controller 68 which in turn is cascaded to the injector controller 66.

The injector controller 66 is used to preferably individually adjust the pressure drop across the ten feed injectors. In each case an actuator 78 is employed to vary the position of suitable atomization adjusting means (not shown). In this embodiment, a movable member is employed to vary the cross-sectional flow area of a throat section of the feed injector and, thereby, the pressure drop. Steam via line 80 is introduced into the feed injector for admixture with the feed oil.

Referring to FIG. 3, a preferred embodiment of an FCCU feed injector according to the present invention is shown, generally designated 99. This injector comprises at one end a nozzle tip 102. A fixed throat nozzle geometry is shown, it being understood that various nozzle geometries are quite possible.

The feed injector is connected to wall 103 of the FCCU reactor by what is termed a "thermal sleeve" arrangement 104. As evident, the feed injector assembly is an integral part of the FCCU reactor system. Other mechanical attachment arrangements will be familiar to those skilled in the art.

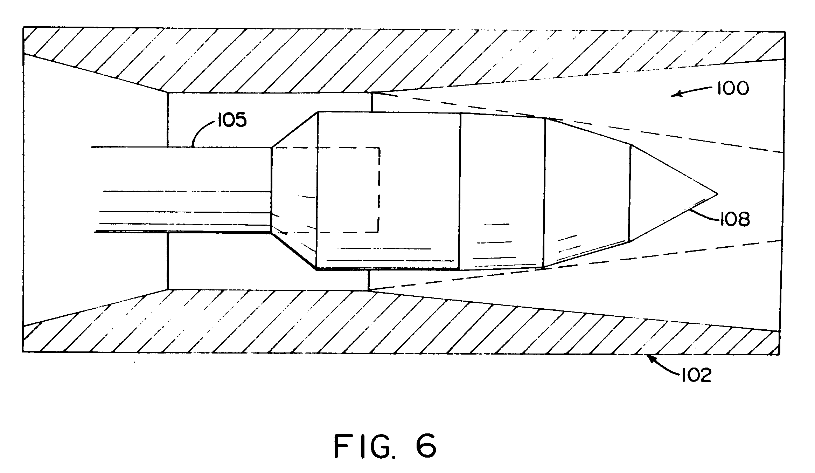

A feed injector nozzle atomization adjustment assembly, generally designated 100, comprising a shaft 105 and a lead portion or adjusting means 106, is shown in greater detail in FIG. 5. An end tip portion 108 of this adjusting means 106 is designed to function within the converging fan tip nozzle 102. Modulation and/or positioning of the end tip portion 108 within the nozzle tip 102 will change the flow area and influence the atomization achieved by the nozzle tip 102. A preferred addition to the basic design of the variable throat feed injector is to include premixers 107 and 109 (in FIG. 5) in close proximity to the nozzle insert tip 106. The premixers enhance the atomization, particularly the spray pattern, achieved by the variable throat feed injector. One embodiment of a FCCU feed injector assembly shown in FIG. 3 represents a minimum stroke design.

The two premixers 107 and 109 are staggered on a 45° offset and act as static mixers, slug/bubble breakers, fluid vibration dampeners and radial flow enhancers. From a fluid flow perspective, they impart a radial or swirling moment to the otherwise axial flow. This enhances the atomization achieved by the nozzle. If the flow regime of the fluid in the process pipe leading to the feed injector should happen to fall into an unattractive regime, such as slug flow, the premixers will serve as slug/bubble breakers and help supply a more homogeneous fluid phase mixture immediately upstream of the variable throat nozzle. This will also help enhance the atomization achieved by the nozzle. The premixers 107 and 109 also assist in alignment of the shaft 105 and atomization adjusting means 106 within the nozzle 102 and process piping 111. The details of a premixer are shown in cross-section in FIG. 5, wherein it is seen that spokes 112 radially emanate from shaft 105 and join a circular rim 113.

In the particular injector assembly configuration shown in FIG. 3, a mixture of steam and oil is introduced upstream of the nozzle tip 102 through a steam oil fluid inlet 114. Because of oil partial pressure effects in the FCCU reactor, it is generally preferred to use an atomization enhancement medium such as steam to help assist in oil atomization, although other gases could be used. However, the variable throat feed injector could operate with oil-only feed, in a mode to pressure atomize/spray oil without steam being used. The atomization enhancement medium could alternatively be introduced into the FCCU reactor through separate connections. However, in a typical operating method for this variable throat feed injector, a steam/oil mixture is formed upstream of the nozzle by flow controlling the steam/oil ratio. The steam/oil ratio will be set based on oil properties and other process considerations. The oil phase may be partially vaporized as a result of preheating. Thus, the fluid mixture being supplied to the feed injector assembly will usually consist of a gas phase, a liquid oil phase and possibly a vapor oil phase.

To conserve on system size, an isolation valve 115 between flanges 116 and 118 may be used as part of the feed injector assembly to allow for onstream maintenance of the system. This isolation valve is usually a gate valve, although other valve types such as a ball valve may be used. The atomization adjusting means assembly for the nozzle can be retracted, the isolation valve closed and the assembly removed as required for on-stream maintenance. For example, if feed type and chemistry should cause undesirable coking or partial plugging of the nozzle inside, the nozzle insert shaft assembly can be removed and subjected to onstream cleaning.

A nozzle maintenance receiver pipe section 117, suitably a spool section of piping, is provided between the isolation valve 115 and flange 120. A spool section 119 holding a conventional packing gland allows for modulation of a throat insert employed as an atomization adjusting means. A low leak design is preferred, although various packing gland designs are acceptable. This spool section also allows for on-stream cleaning and maintenance of the nozzle atomization adjustment assembly. It will be appreciated that simplified injector assembly designs are optional, if on-stream maintenance or cleaning is not a concern.

A suitable mechanical positioning means is exemplified by actuator assembly 221, which provides for the mechanical movement, modulation and stroke control of the nozzle atomization adjustment assembly and shaft. Control of the relative position of the nozzle atomization adjustment assembly relative to the nozzle tip 102 influences the atomization and/or spray pattern from the nozzle. In a typical design, a pneumatic actuator with a manual override feature (hand wheel operator) is employed. Other actuator configurations are also acceptable, including a hydraulic actuator or motor-driven actuator. The actuator is capable of receiving control instructions from other instruments and controllers and moving the position of the atomization adjusting means based on these control instructions.

Generally, pneumatic actuators will be preferred over hydraulic actuators because of relative cost, and pneumatic or hydraulic actuators preferred over other types because of reliability. However, unit specific factors may influence actuator selection.

A shaft coupling 223, a bolted flange type, is shown to mate the shaft of the adjustment assembly 100 to the actuator assembly 221. Various shaft coupling designs are acceptable.

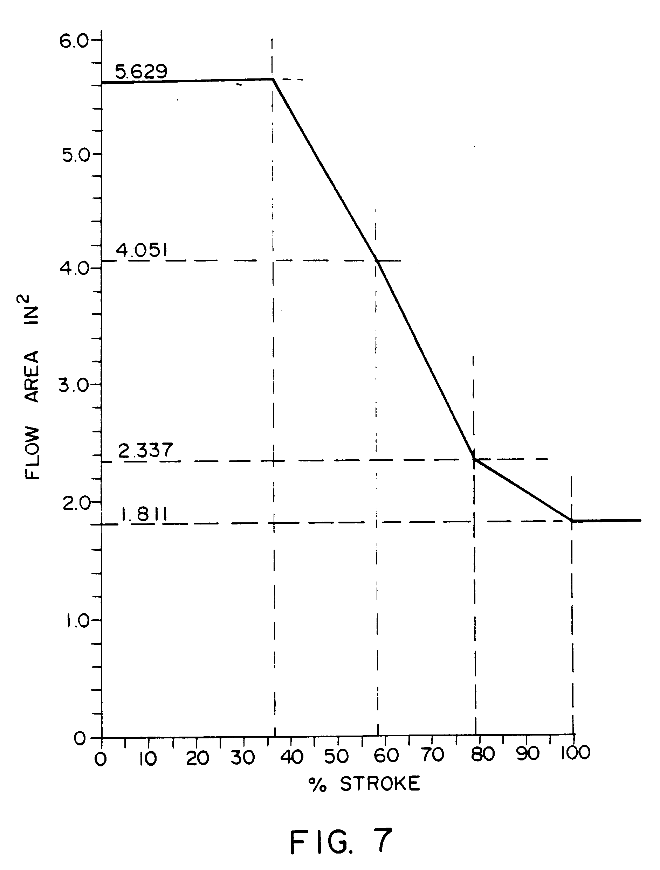

FIG. 6 shows in greater detail nozzle adjustment assembly 100 (without premixers), positioned at the distal end of shaft 105 and inserted into fan nozzle 102. A tip portion 108 of the nozzle adjustment adjusting means 106 is shown at its estimated maximum insertion point. FIG. 7 shows a graph, for a typical variable throat nozzle, wherein the flow area is plotted against the percent stroke of the shaft used to move the nozzle atomization adjustment assembly by its actuator.

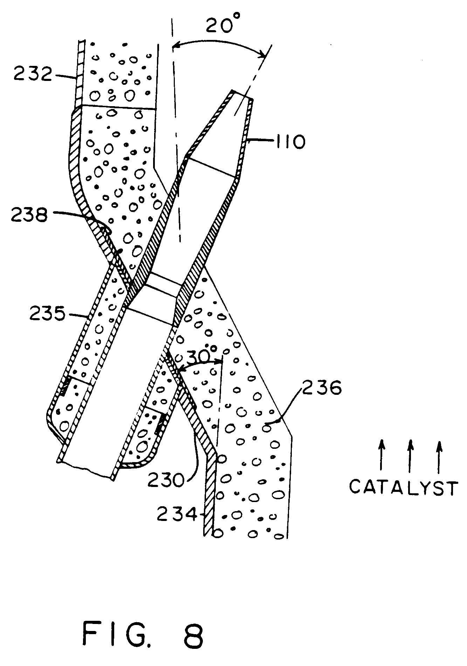

FIG. 8 shows in detail an installation of a typical feed injector attached to the wall of a catalytic reactor riser. The nozzle tip portion 110 is shown positioned at a preferred angle of 20 degrees to the vertical. The feed injector is shown in cross-section transversing a conical segment shaped wall 230 section which itself is at a 30 degree angle from the vertical, between an upper relatively larger diameter cylindrical vertical wall portion 232 and a lower relatively smaller diameter cylindrical vertical wall portion 234 of the riser. Different attachment angles and orientation angles may be used depending on the specific unit and type of injector.

As evident to those skilled in the art, the installation of the injector is conventional and utilizes a pipe cap 235 and castable lining 236 beneath the metal walls of the reactor apparatus. A kaowool pad plate 238 surrounds the circumference of the feed injector where it pierces the riser wall. Welding at appropriate edges renders the connection airtight. Other mechanical attachment arrangements, known to those skilled in the art, are suitable.

Example 1

This example illustrates tests for collecting data on atomization associated with various nozzle configurations used in FCCU feed injection.

Fine droplets and a wide angle spray are expected to provide more rapid and uniform catalyst/oil mixing in the riser and improve the FCCU operation over the existing nozzles. The approach taken in these tests was to conduct cold model tests to examine the effects of liquid viscosity and vapor/liquid flow rates on droplet size, spray dispersion angle, and nozzle pressure drop. Droplet sizes of the sprays were measured with a Laser Doppler Anemometer (LDA). Nitrogen and water/glycerine solutions were used to simulate steam-oil feed. Correlations for predicting the mean droplet size and the pressure drop for a nozzle was developed for use in designing and controlling feed injectors according to the present invention.

Although pressure nozzles, spinning disks and pneumatic nozzles are three basic types of atomizers used in industry, these tests were confined to an investigation of pneumatic nozzles in which a compressible fluid such as air or steam of high velocity is used to disintegrate a liquid jet. The most widely quoted work in pneumatic atomization is a drop-wise correlation by Nukiyama and Tanasawa (Nukiyama and Tanasawa, Trans. Soc. Mech. Engrg., Japan, 6122, 57-58, 1940). This correlation, however, was derived from test data with gas to liquid mass flow ratios on the order of ten compared to the mass flow ratio of about 0.01 used in these tests. For the present conditions, the correlation of Kim and Marshall (K. Y. Kim and W. R. Marshall, Jr., "Drop-size Distribution from Pneumatic Atomizers", AIChE Journal, pp. 575-584, Vol. 17, No. 3, May, 1971) is more suitable and therefore was used to compare the test measurements. Kim and Marshall covered the range of gas-liquid relative velocity from 76.2 m/s (250 ft/sec) to sonic velocity, viscosity 1 to 50 cp, and gas-liquid mass ratio 0.06 to 40. The operating ranges of this test program were relative velocity of 70 to 213.4 m/s (200 to 700 ft/sec), viscosity 1.3 to 2.6 cp, and gas-liquid mass ratio from 0.002 to 0.008. These correlations are described below.

Kim and Marshall drop-size correlations for convergent-type pneumatic nozzles were obtained for the following ranges: drop-size, 6 to 350 $\mu$m mass medium diameter; mass flow ratio, 0.06 to 40; relative velocity, 250 ft/sec to sonic velocity, and viscosity 1 to 50 cp.

$$\overline{X}_m = 249 \frac{\sigma^{0.41}\mu_1^{0.32}}{(v_{rel}^2\rho_a)^{0.57}A^{0.36}\rho_1^{0.16}} + 1260 \left(\frac{\mu_1^2}{\rho_1\sigma}\right)^{0.17} \frac{1}{v_{rel}^{0.54}} \left(\frac{M_a}{M_1}\right)^m$$

where m = -1, if $M_a/M_1$ <3; m = -0.5, if $M_a/M_1$ >3.

$$\overline{X}_{vs} = 0.83\,\overline{X}_m$$

where:

| | |
|---|---|
| $\overline{X}_m$ | = Mass medium diameter, $\mu$m |
| $\overline{X}_{vs}$ | = sauter mean diameter, $\mu$m |
| $\sigma$ | = Surface tension, dynes/$\mu$m |
| $\mu_1$ | = Liquid viscosity, cp |
| $\rho_a,\rho_1$ | = Gas and liquid densities, lb/ft$^3$ |
| A | = Area, ft$^2$ |
| $v_{rel}$ | = Gas to liquid relative velocity, ft/sec |
| $M_a,M_1$ | = Gas to liquid mass flowrates, lbs/min |

The experimental set-up consisted of a chamber 0.915 m square and 1.83 m long (3 feet square and 6 feet long) equipped with light and viewing windows. The nozzle was mounted at one end of the rig and sprayed in horizontally. A screen at the far end of the rig was used to trap the spray. A liquid feed mixing tank was used to blend glycerine with water to provide the desired viscosity. Still pictures were taken to determine the spray angle and the Laser Doppler Anemometer (LDA) was used to measure drop size.

The LDA technique for sizing spherical droplets is based on the measurement of the relative phase shift that occurs when two light waves pass through the droplets on different paths. By measuring the visibility or amplitude modulation of the interference pattern formed by the scattered light and collected over a finite collecting operation, adequate information to size the droplets can be obtained.

The hardware system comprises the following pieces of equipment: transmitter, receiver, visibility processor, data management system, keyboard, Krohn-hite filter, and Anadex printer. The detailed descriptions of these components are given in "Operation Guide for Droplet Sizing Interferometer," by Spectron Development Laboratories, Inc., SDL No. 82-51025, Costa Mesa, California (1982).

The function of the transmitter is to project two coherent laser beams into a chosen test space where they may be moving droplets. The droplets scatter light from the fringe pattern caused by the crossing beams and the frequency and modulation yield the velocity and size of the measured droplets. In general, it is necessary to perfect the new alignment each time anything is changed, but these adjustments are simple. The "permanent" alignments, which require more care, need only be touched very rarely, if at all.

The transmitter contains a Spectra-Physics Model Number 107 DEM Helium Neon Laser, laser power supply, steering mirrors, a telescopic beam expander, a half wave plate, a beam steering prism, a 50% beamsplitter and interchangeable output optics.

The receiver is essentially a telescope with a photomultiplier to collect light from the focal point, at which there is an interchangeable pinhole. The positioning of the entire assembly is so as to align it approximately with the transmitted probe volume. The receiver collects light that has been scattered from anything within the illuminated sample volume and directs it on to the cathode of the photomultiplier.

The Visibility and Doppler Signed Processor is a microprocessor which produces particle size information from optical data transmitted from the receiver.

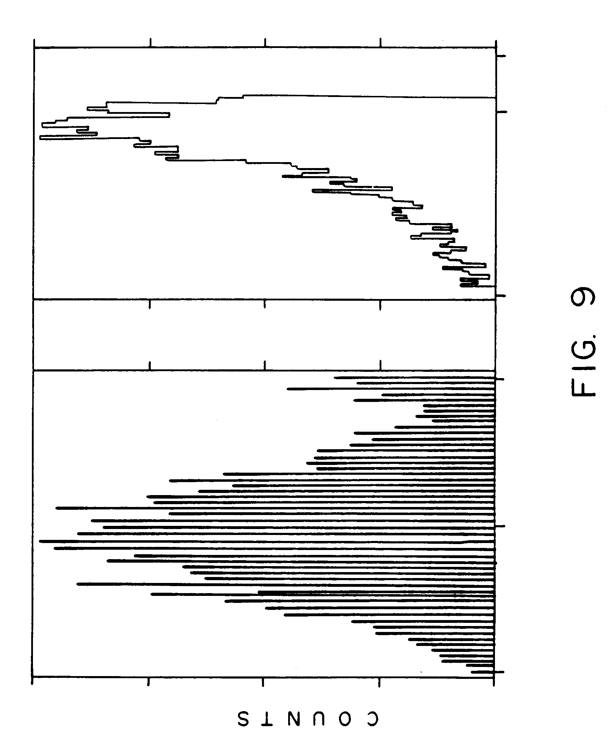

An Apple-II Plus was used to collect and process data. FIG. 9 illustrates a typical droplet size distribution and a droplet velocity distribution. The output also includes linear mean diameter, surface mean diameter, volume mean diameter, sauter mean diameter, and droplet mean velocity.

Three different test nozzles (numbered 1, 2, and 3) were studied, wherein drop size and spray angle associated with each of the three nozzles were measured at various vapor/liquid feed rates. Sauter mean diameter of drops with nozzles nos. 1 and 2 were all greater than 1000 $\mu$m (Run 1-6 and 17-21). The drop size measurement with LDA was restricted to 1000 $\mu$m or smaller due to the narrow angle of laser beams achievable through the tank windows.

The distribution of drop sizes with nozzle no. 3 appear to be wide and bimodal. A complete first mode and part of the second mode were recorded in the sprays when the liquid flow rate was lowest at 10 gpm as in Runs 11 and 16. The base case liquid rate scaled down from a commercial FCCU is 4.40 litres pm (20 gpm). This indicates that spray drop size can be reduced by lowering the liquid feed rate in the commercial FCCU when using a fan nozzle. Higher liquid viscosity gave larger drops as indicated by the drop size data with 1.3 cp (Runs 7, 8, 11) and 2.6 cp (Runs 12, 13, 16) liquids.

The spray dispersion angles obtained from pictures with nozzle no. 3 were in the range of 80° to 110°, while those with nozzle no. 2 were between 25° and 40°. The spray angles with both nozzles were wider with higher gas/liquid ratios.

The nozzle pressure drop, representing energy consumption, was also compared with the three nozzles. The data, shown in Table 1, indicates that $\Delta$P with the nozzle no. 3 was about 33% lower than with nozzle no. 2 at the same gas/liquid flow rates. The effect of liquid viscosity on $\Delta$P was not noticeable in the narrow viscosity range of 1.3 to 2.6 cp.

Reasonably good results were obtained with the exponent m of the Kim and Marshall correlation was taken to be -0.9 to predict the Sauter Mean Diameter (SMD) of the fan nozzle spray. Such data on various flow rates, fluid properties, and nozzle designs and control responses can be used to develop correlations useful for feed injector design and control responses.

## Table 1

### FCCU Feed Nozzle Test Parameters and Test Results

| Nozzle No. | Gas Flowrate litres/min. (scfm) | Liquid Flowrate litres per min. (gpm) | Liquid Viscosity cp | Or Vel. @ Throat m/sec (ft/sec) | Nozzle ΔP kPa (psi) | Spray Angle ° | Sauter Mean Diameter μm |
|---|---|---|---|---|---|---|---|
| 1 | 0.325 (9.2) | 90.9 (20) | 1.3 | 30.49 (100) | 124.0 (18) | -(4) | 1000+ |
| 1 | 0.325 (9.2) | " (20) | 1.3 | 30.49 (100) | 124.0 (18) | -(4) | 1000+ |
| 2 | 0.653 (18.5) | " (20) | 1.3 | 54.27 (178) | 172.25 (25) | -(4) | 1000+ |
| 2 | 0.1625 (4.6) | " (20) | 1.3 | 18.90 (62) | 103.35 (15) | -(4) | 1000+ |
| 2 | 0.325 (9.2) | 181.8 (40) | 1.3 | 37.50 (123) | 351.40 (51) | -(4) | 1000+ |
| 2 | 0.325 (9.2) | 45.5 (10) | 1.3 | 27.13 (89) | 48.23 (7) | -(4) | 1000+ |
| 3 | 0.325 (9.2) | 90.9 (20) | 1.3 | 30.49 (100) | 89.57 (13) | -(4) | 789 |
| 3 | 0.635 (18.5) | " (20) | 1.3 | 54.27 (178) | 124.0 (18) | -(4) | 813 |
| 3 | 0.1625 (4.6) | " (20) | 1.3 | 18.90 (62) | 68.9 (10) | -(4) | 1000+ |
| 3 | 0.325 (9.2) | 181.8 (40) | 1.3 | 37.50 (123) | 248.0 (36) | -(4) | 1000+ |
| 3 | 0.325 (9.2) | 45.5 (10) | 1.3 | 27.13 (89) | 20.67 (3) | -(4) | 690 |
| 3 | 0.325 (9.2) | 90.9 (20) | 2.6 | 30.49 (100) | 82.68 (12) | 80 | 835 |

EP 0 444 860 B1

| Nozzle Nos. | Gas Flowrate (scfm) | Liquid Flowrate litres pm (gpm) | Liquid Viscosity cp | Or Vel. @ Throat (ft/sec) | Nozzle ΔP kPa (psi) | Spray Angle ° | Sauter Mean Diameter µm |
|---|---|---|---|---|---|---|---|
| 3 | 0.653 (18.5) | 90.9 (20) | 2.6 | 54.27 (178) | 117.1 (17) | 110 | 857 |
| 3 | 0.1625 (4.6) | " (20) | 2.6 | 18.9 (62) | 68.9 (10) | 80 | 1000+ |
| 3 | 0.325 (9.2) | 145.5 (32) | 2.6 | 34.76 (114) | 179.1 (26) | -(4) | 1000+ |
| 3 | " (9.2) | 45.45 (10) | 2.6 | 27.13 (89) | 20.7 (3) | 95 | 773 |
| 2 | " (9.2) | 90.9 (20) | 2.6 | 30.49 (100) | 124.0 (18) | 35 | 1000+ |
| 2 | 0.653 (18.5) | " (20) | 2.6 | 54.27 (178) | 172.3 (25) | 40 | 1000+ |
| 2 | 0.1625 (4.6) | " (20) | 2.6 | 18.9 (62) | 103.4 (15) | 35 | 1000+ |
| 2 | 0.325 (9.2) | 172.7 (38) | 2.6 | 36.9 (121) | 337.6 (49) | -(4) | 1000+ |
| 2 | " (9.2) | 45.45 (10) | 2.6 | 27.13 (89) | 48.2 (7) | 25 | 1000+ |

Example 2

This example illustrates a flow control scheme for an FCCU according to the present invention. Although the description was written for application to a Flexicracking™ (a trademark of Exxon Research and Engineering Company) fluid catalytic cracking unit, application to other fluid catalytic cracking units will be appreciated by those skilled in the art. The following information in Tables 2, 3, and 4 below are used in the control scheme. (Units of klb/hr, °F, psi, and psig are obtained by calculation. Instrument Tag ID numbers for a particular plant are shown.)

Table 2

| Process Information Available from the Unit Instrumentation | |
|---|---|
| Instrument ID | Description |
| FC-F2005-IC | Riser Injection Steam Rate |
| FC-F2004-RC | Reactor Total Feed Rate |
| FC-F2216-IC | HCCO Recycle Rate |
| FC-F2224-IC | Bottoms ("Slurry") Recycle Rate |
| FC-F2203-I | Total Fresh Feed Rate |
| FC-T2214-RC | Total Fresh Feed Temperature |
| FC-T2248-I | Total Fresh Feed Temperature |
| FC-P2099-dRC (A to J) | Feed Injector Nozzle Pressure Drop |
| FC-Z2099-I (A to J) | Feed Injector Nozzle Insert Position |
| FC-P2005-dR | Reactor Riser Differential Pressure |
| FC-P2001-R | Reactor Pressure Drop |

## Table 3

### Process Information Calculated
### by the Control Computer

| PMX Variable ID | Definition | Calculation |
|---|---|---|
| FC-X2000 | Total Recycle to Total Feed Ratio | (F2216 + F2224)/F2004 |
| FC-X2001 | "Slurry" Recycle to Total Feed Ratio | F2224/F2004 |
| FC-X2002 | HCCO Recycle to Total Feed Ratio | F2216/F2004 |
| FC-X2003 | Fresh Feed to Total Feed Ratio | F2203/F2004 |
| FC-X2004 | Total Mass Flow Rate | F2005 + F2203 + F2216 + F2224 |
| FC-X2005 | Est. Nozzle Outlet Pressure | P2005 + P2001 + 14.7 |
| FC-X2006 | Est. Nozzle Inlet Pressure | X2005 + P2099avg |
| FC-P2099avg | Average Nozzle Pressure Drop | (P2099A + P2099B + P2099C + P2099D + P2099E + P2099F + P2099G + P2099H + P2099I + P2099J)/10 |
| FC-X2007 | Nozzle Pressure Ratio | X2006/X2005 |
| FC-X2008 | Average Feed Temperature | (T2214 + T2248)/2 |
| FC-XVAPRF | Estimated Vapor Fraction | (XKFF/11.6) * (0.01 + (0.08/300) * (X2008 - 400)), a GSK-specific estimate |
| FC-X2009 | Estimated HC Vapor Rate | XVAPFR * F2203 |
| FC-X2010 | Estimated Steam Density | (((X2006 + X2005)/2) * 18)/(10.73 * (X2008 + 460)), lb/cf |

15

| FC-X2011 | Estimated HC Vapor Density | (((X2006 + X2005)/2) * 300 * (11.6/XKFF))/(10.73 * 0.95 * (X2008 + 460)), lb/cf |
| --- | --- | --- |
| FC-X2012 | Estimated Fresh Feed Density | 62.4 * XFFSG, lb/cf |
| FC-X2013 | Estimated HCCO Density | 62.4 * XHRSG, lb/cf |
| FC-X2014 | Estimated Bottoms Density | 62.4 * XBRSG, lb/cf |
| FC-X2015 | Steam Volume | F2005/X2010 |
| FC-X2016 | HC Vapor Volume | X2009/X2011 |
| FC-X2017 | FF Liquid Volume | (F2203-X2009)/X2012 |
| FC-2018 | HCCO Volume | F2216/X2013 |
| FC-X2019 | Bottoms Volume | F2224/X2014 |
| FC-X2020 | Total Volume | X2015 + X2016 + X2017 + X2018 + X2019 |
| FC-X2021 | Two Phase Mixture Density | (X2015/X2020) * X2010 + (X2016/X2020) * X2011 + (X2017/X2020) * X2012 + (X2018/X2020) * X2013 + ((X2019/X2020) * X2014, lb/cf |
| FC-X2022 | Vapor Phase Density | (X2015/X2020) * X2010 + (X2016/X2020) * X2011, lb/cf |
| FC-X2023 | "y" | (X2009 + F2005)/ X2004 |
| FC-X2024 | "B" | X2023 ** -0.49 |
| FC-X2025 | Sonic Velocity | 68 * (X2024/X2021) * ((XCPCV * ((X2005 + X2006)/2) * X2022)**0.5) |
| FC-X2026 | Throat Average Velocity | X2020/(3600 * XTONAREA) |

16

The variable XTONAREA is the total nozzle flow area, sq. ft. Individual position of the nozzle insert in each nozzle will allow the flow area in the throat to be calculated for the nozzle geometry. The total flow area available is then calculated based on the number of active nozzles in service.

The throat velocity is compared to the sonic velocity. If the throat velocity is greater than 65% of the sonic velocity, then the sonic flow pressure drop equation is used to calculate a flow coefficient ("CF"). If the throat velocity is less than 65% of sonic, the sub-sonic flow equation is used to calculate a flow coefficient. Sub-sonic "CF" is defined as follows:

$$CF = ((A_o * 2 * X2021 * X2026 * X2026)/P2099avg) ** 0.5$$

Sonic "CF" is defined as follows:

$$CF = ((B_o * 2 * X2021 * X2026 * X2025)/P2099avg) ** 0.5$$

where $A_o$ and $B_o$ are constants which must be determined empirically for each particular nozzle design.

Table 4

| Run Plan Specific Information (supplied by the unit operator) | |
|---|---|
| "PMX" Variable ID | Description |
| FC-XKFF | Fresh Feed Characterization Factor |
| FC-XFFSG | Fresh Feed Specific Gravity |
| FC-XHRSG | HCCO Recycle Specific Gravity |
| FC-XBRSG | Bottoms Recycle Specific Gravity |

A flow control operating mode will now be described, using the information provided above. A total feed flow controller, designated F-2004-RC, will reset individual feed injector nozzle controllers to open or close the available flow area to allow more or less total feed to pass into the reactor. The flow coefficient parameter "CF" will be monitored in an open loop fashion to ensure that a good atomization region is being maintained. Typically the operator would manipulate the injection steam rate as a means of maintaining a target "CF". The control computer calculated value for the flow coefficient "CF" is a more direct indication of the performance of the feed injector atomization. The process feed injector pressure drop reading is a gross indication of feed injector atomization, but many process factors can and will influence this reading. By applying the sub-sonic or sonic feed injector pressure drop equations to calculate a flow coefficent "CF", a more representative indication of feed atomization is obtained. This allows flexibility for more intelligent control decisions and hierarchy to be applied to the fluid catalytic cracking process to achieve target operating objectives.

To minimize process disturbances, ten feed injector nozzles may be ramped open or closed by moving opposing pairs of nozzles as a unit. (The pairings would typically be as follows: A/F, B/G, C/H, D/I, and E/J). In the stroke range from 36% to 80% each pair of injectors would be moved a maximum of about 10% stroke at a time in response to feed rate changes. This 10% increment corresponds to about 2.7% of the total nozzle throat area being manipulated at one time. Table 5 below illustrates a typical sequential flow area change using this technique:

Table 5

| Nozzle ID | Start | | First Step | |
|---|---|---|---|---|
| | Stroke, % | Throat Area | Stroke, % | Throat Area |
| A | 36 | 5.629 | 46 | 4.859 |
| F | 36 | 5.629 | 46 | 4.859 |
| B | 36 | 5.629 | 36 | 5.629 |
| G | 36 | 5.629 | 36 | 5.629 |
| C | 36 | 5.629 | 36 | 5.629 |
| H | 36 | 5.629 | 36 | 5.629 |
| D | 36 | 5.629 | 36 | 5.629 |
| I | 36 | 5.629 | 36 | 5.629 |
| E | 36 | 5.629 | 36 | 5.629 |
| J | 36 | 5.629 | 36 | 5.629 |
| Total Throat Area = 56.29 | | | 54.75 | |
| Nozzle ID | Second Step | | Third Step | |
| | Stroke, % | Throat Area | Stroke, % | Throat Area |
| A | 46 | 4.859 | 46 | 4.859 |
| F | 46 | 4.859 | 46 | 4.859 |
| B | 46 | 4.859 | 46 | 4.859 |
| G | 46 | 4.859 | 46 | 4.859 |
| C | 36 | 5.629 | 46 | 4.859 |
| H | 36 | 5.629 | 46 | 4.859 |
| D | 36 | 5.629 | 36 | 5.629 |
| I | 36 | 5.629 | 36 | 5.629 |
| E | 36 | 5.629 | 36 | 5.629 |
| J | 36 | 5.629 | 36 | 5.629 |
| Total Throat Area = 53.21 | | | 51.67 | |

Table 5 above illustrates how a very precise flow area control can be maintained and manipulated to achieve the desired level of feed atomization. The above case is an illustration of a controlled ramping closed of the feed injectors, caused by either a change in total feed rate to the unit or a change in the target amount of injection steam being used. To ramp open the feed injector flow area a reverse sequence would be used.

The control computer application program could be constructed in several different forms. The total feed flow controller, F-2004-RC, could be cascaded directly to the feed injector actuators, H-2099-IC (A to J), or in a layered hierarchy with F-2004-RC cascaded to P-2099-dRC (A to J) which in turn could be cascaded to the individual feed injector actuators, H-2099-IC (A to J). Having individual actuator controllers and PdRC instrumentation on each feed injector provides flexibility for on stream maintenance and control loop tuning of the feed injector system. Lower cost configurations are possible with fewer instruments, and would represent a simplified version of the configuration detailed above.

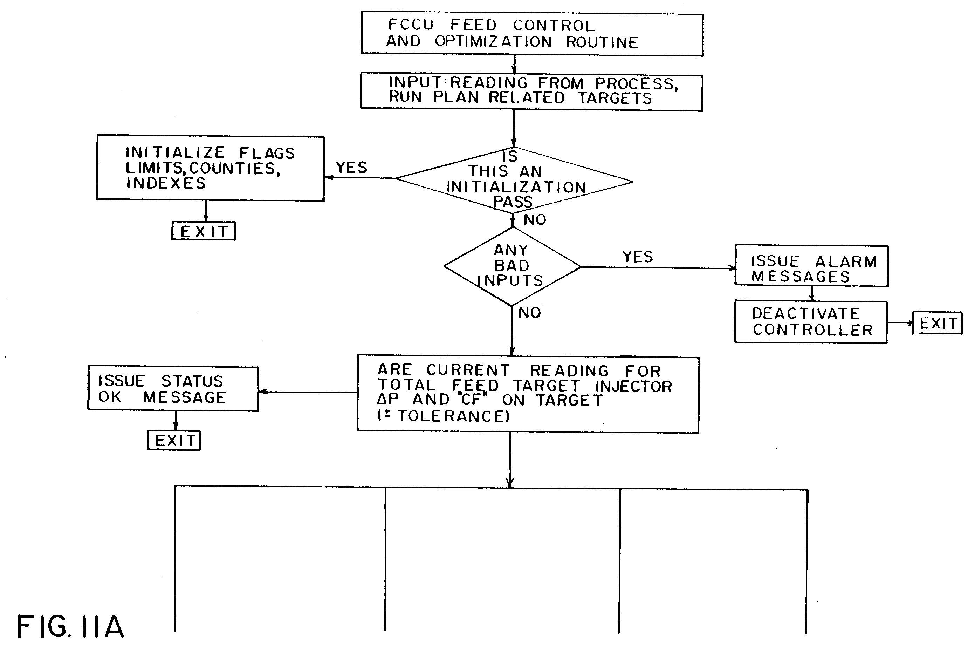

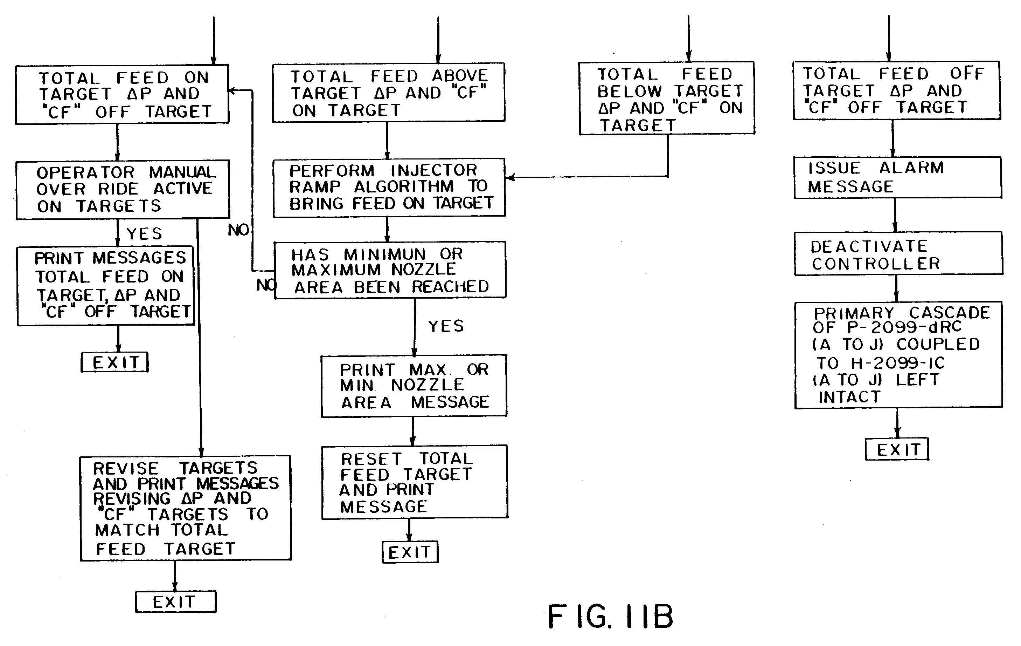

FIG. 11 (parts A and B) is a schematic illustrating the basic structure of a typical control computer application program to vary feed injector throat area based on total reactor feed processing objectives. It is based on a ten variable throat feed injector system with a PdRC controller cascaded to the injector actuator, HIC: P-2099-dRC A cascaded to H-2099-IC A, etc. Operator-supplied set points for P-2099-dRC (A to J) are based on a unit specific run plan to initialize the system. This set point is consistent with a target spray pattern. The calculated flow coefficient "CF" will be calculated in a real time frame. This "CF" will be used as an index of feed atomization.

Example 3

In the above example, a technical package reflecting application of a FCCU process control scheme to a Flexicracking™ unit was developed specifically for a particular Flexicracking™ unit and uses instrument tag ID numbers, etc. from the plant. This application could be applied to other FCCUs in a similar fashion,

18

although unit-specific items might influence the final functional form of the application as well as location-specific cost issues associated with any revamp.

The control scheme detailed above is based on a "single stage" reactor configuration where the oil feed is introduced at a specific point along the length of the reactor. This scheme could also be applied to "multi-stage" reactor configurations where the oil feed is introduced at several points along the length of the riser. When applied to a "multi-stage" configuration, various hybrid control configurations become possible. The matrix in Table 6 below illustrates how four distinct control schemes could optimally be applied to a two stage reactor configuration. For more than two stages, a much larger matrix is appropriate. A two stage system is viewed as a reasonable commercial configuration with three stages being a possible commercial "stretch case" depending on economics. The four district control schemes might typically be defined as follows: (1) total flow control, (2) reactor temperature control, (3) carbon and heat balance control, and (4) yield selectivity/quality control.

Table 6

| Control Scheme Matrix - Two Stage Reactor Configuration (Tag numbers refer to the control schemes detailed above) | | | | | | | | | | | | | |
|---|---|---|---|---|---|---|---|---|---|---|---|---|---|
| Case: | 1 | 2 | 3 | 4 | 5 | 6 | 7 | 8 | 9 | 10 | 11 | 12 | 13 | 14 |
| Stage A | 1 | 1 | 1 | 1 | 2 | 2 | 2 | 2 | 3 | 3 | 3 | 3 | 4 | 4 |
| Stage B | 1 | 2 | 3 | 4 | 1 | 2 | 3 | 4 | 1 | 2 | 3 | 4 | 1 | 2 |
| Case: | 15 | 16 | 17 | 18 | 19 | 20 | 21 | 22 | 23 | 24 | 25 | 26 | 27 | 28 |
| Stage A | 4 | 4 | 2 | 3 | 4 | 1 | 3 | 4 | 1 | 2 | 4 | 1 | 2 | 3 |
| Stage B | 3 | 4 | 1 | 1 | 1 | 2 | 2 | 2 | 3 | 3 | 3 | 4 | 4 | 4 |

For a multi-stage reactor configuration, a commercial installation would probably install the necessary instrumentation to provide flexibility to operate in any one of the 28 possible configurations outlined above. Various run plan-specific and economic-specific items would tend to favor certain operating cases over others, but it would be difficult to predict which of the 28 possible cases would be the most attractive under all possible operating scenarios.

It will be understood that while there have been herein described certain specific embodiments of the invention, it is not intended thereby to have it limited to or circumscribed by the details given, in view of the fact that the invention is susceptible to various modifications and changes which came within the spirit of the disclosure and the scope of the appended claims.

Notes

"LP control" refers to "linear program control"
"mogas" designates "motor gasoline"
"gpm" denotes US gallon/minute
"scfm" denotes "standardised cubic feet/minute".
"lb" denotes "pound weight" (= 0.4536 kg)
"psi" denotes "pounds per square inch" (= 6.895 KPa)
"barrel" denotes 159 liter.

**Claims**

1. A method of controlling the introduction of hydrocarbonaceous feed into the reaction zone of a fluidized catalytic cracking unit (FCCU) via one or more feed injectors, the method comprising monitoring the pressure drop (dP) across at least one of said injectors (or a part thereof), deriving a signal representative of dP, and employing said signal to adjust, for at least one selected injector, a feed atomization parameter until the feed atomization parameter falls within a range corresponding with a desired degree of atomization of feed passing through at least the selected injector(s).

2. The method of claim 1 wherein the pressure drop affects the average feed droplet size, droplet size distribution and/or spray pattern of said feed introduced into the reaction zone, and wherein the atomization is controlled by a step comprising varying the cross-sectional flow area across a throat section of said feed injector(s).

3. The method of claim 1 or claim 2 wherein said atomization is adjusted to compensate for changing upstream properties of said feed passing to said feed injector(s).

4. The method of any one of claims 1 to 3 wherein said degree of atomization is determined by a preselected set point, which is optimized for a given yield and/or selectivity objective.

5. The method of any one of claims 1 to 4 wherein the atomization by the or each feed injector is adjusted by movement of a member disposed in a throat section of the respective feed injector.

6. The method of any one of claims 1 to 5 wherein said atomization is varied in real time.

7. A fluidized catalytic cracking unit (FCCU) comprising one or more feed injectors connected for introducing a hydrocarbonaceous feed into a reaction zone of the FCCU, means for monitoring the pressure drop (dP) across at least one of the injectors (or a part thereof), means operable to derive a signal representative of dP, and means responsive to said signal to adjust, for at least one selected injector, a feed atomization parameter to provide a feed atomization parameter within a range corresponding with a desired degree of atomization of feed passing through at least the selected injector(s).

8. The FCCU of claim 7 comprising a means for comparing said signal based on dP to another signal based on a preselected set point value and adjusting said atomization so as to diminish any difference between said first and second signals.

**Patentansprüche**

1. Verfahren zur Steuerung der Einbringung eines kohlenwasserstoffartigen Einsatzmaterials in die Reaktionszone einer katalytischen Wirbelbett-Crackanlage (FCCU) über einen oder mehrere Einsatzmaterial-Injektoren, bei dem der Druckverlust (dP) über mindestens einen der Injektoren (oder einen Teil davon) aufgezeichnet wird, ein für dP repräsentatives Signal ermittelt wird und das Signal verwendet wird, um für mindestens einen Injektor einen Einsatzmaterialzerstäubungsparameter einzustellen, bis der Einsatzmaterialzerstäubungsparameter in einem Bereich liegt, der einem bestimmten Zerstäubungsgrad des durch mindestens den gewählten Injektor bzw. die gewählten Injektoren geleiteten Einsatzmaterials entspricht.

2. Verfahren nach Anspruch 1, bei dem der Druckverlust die mittlere Tröpfchengröße des Einsatzmaterials, die Verteilung der Tröpfchengröße und/oder das Sprühmuster des Einsatzmaterials beeinflußt, das in die Reaktionszone eingebracht wird, und bei dem die Zerstäubung durch einen Verfahrensschritt gesteuert wird, bei dem die Querschnittströmungsfläche über einen Verengungsabschnitt des Einsatzmaterial-Injektors bzw. der Einsatzmaterial-Injektoren variiert wird.

3. Verfahren nach Anspruch 1 oder Anspruch 2, bei dem die Zerstäubung eingestellt wird, um die stromaufwärts stattfindende Veränderung der Eigenschaften des zu dem Einsatzmaterial-Injektor bzw. den Einsatzmaterial-Injektoren geleiteten Einsatzmaterials zu kompensieren.

4. Verfahren nach einem der Ansprüche 1 bis 3, bei dem der Zerstäubungsgrad durch einen vorgewählten Einstellungspunkt bestimmt wird, der für ein gegebenes Ausbeute- und/oder Selektivitätsziel optimiert ist.

5. Verfahren nach einem der Ansprüche 1 bis 4, bei dem die Zerstäubung von dem oder von jedem Einsatzmaterial-Injektor durch Bewegung einer in einem Verengungsabschnitt des jeweiligen Einsatzmaterial-Injektors angeordneten Einrichtung eingestellt wird.

6. Verfahren nach einem der Ansprüche 1 bis 5, bei der die Zerstäubung in Echtzeit variiert wird.

**7.** Katalytische Wirbelbett-Crackanlage (FCCU), die einen oder mehrere Einsatzmaterial-Injektoren, die zur Einbringung eines kohlenwasserstoffartigen Einsatzmaterials in die Reaktionszone der FCCU angebracht sind, Einrichtungen zur Aufzeichnung des Druckverlustes (dP) über mindestens einen der Injektoren (oder einen Teil davon), Einrichtungen, die ein für dP repräsentatives Signal ermitteln können, und Einrichtungen umfaßt, die auf das Signal ansprechen, um einen Einsatzmaterialzerstäubungsparameter für mindestens einen ausgewählten Injektor einzustellen, um für einen Einsatzmaterialzerstäubungsparameter innerhalb eines Bereiches zu sorgen, der einem gewünschten Zerstäubungsgrad des durch mindestens den gewählten Injektor bzw. die gewählten Injektoren geleiteten Einsatzmaterials entspricht.

**8.** FCCU nach Anspruch 7, die Einrichtungen umfaßt, um das auf dP basierende Signal mit einem anderen Signal zu vergleichen, welches auf einem vorgewählten Einstellungswert basiert, und um die Zerstäubung so einzustellen, daß jeglicher Unterschied zwischen dem ersten und dem zweiten Signal vermindert wird.

## Revendications

**1.** Procédé de contrôle de l'introduction d'une charge d'alimentation hydrocarbonée dans la zone réactionnelle d'une unité de craquage à catalyseur fluidisé (FCCU) via un ou plusieurs injecteurs d'alimentation, le procédé consistant à surveiller la chute de pression (dP) à travers au moins un desdits injecteurs (ou une partie d'entre eux), à en déduire un signal représentatif de dP et à utiliser ledit signal pour ajuster, pour au moins un injecteur sélectionné, un paramètre d'atomisation de l'alimentation jusqu'à ce que celui-ci tombe dans une plage correspondant à un degré souhaité d'atomisation de l'alimentation passant par au moins le ou les injecteurs sélectionné(s).

**2.** Procédé selon la revendication 1, dans lequel la chute de pression affecte le calibre moyen des gouttelettes, la distribution des calibres des gouttelettes et/ou le schéma de pulvérisation de ladite charge d'alimentation introduite dans la zone réactionnelle, et dans lequel l'atomisation est contrôlée par une opération consistant à faire varier la surface d'écoulement en coupe transversale en travers d'une section de gorge dudit ou desdits injecteurs d'alimentation.

**3.** Procédé selon la revendication 1 ou 2, dans lequel ladite atomisation est ajustée pour compenser le changement des propriétés en amont de ladite alimentation passant dans ledit ou lesdits injecteurs d'alimentation.

**4.** Procédé selon l'une quelconque des revendications 1 à 3, dans lequel ledit degré d'atomisation est déterminé par un point de consigne présélectionné, qui est optimisé pour un objectif donné de rendement et/ou de sélectivité.

**5.** Procédé selon l'une quelconque des revendications 1 à 4, dans lequel l'atomisation par le ou chaque injecteur d'alimentation est ajustée par le mouvement d'un élément disposé dans une section de gorge de l'injecteur d'alimentation respectif.

**6.** Procédé selon l'une quelconque des revendications 1 à 5, dans lequel ladite atomisation est modifiée en temps réel.

**7.** Unité de crackage à catalyseur fluidisé (FCCU) comprenant un ou plusieurs injecteurs d'alimentation connectés pour introduire une charge d'alimentation hydrocarbonée dans une zone réactionnelle de la FCCU, des moyens pour surveiller la chute de pression (dP) à travers au moins un des injecteurs (ou une partie d'entre eux), des moyens pour en déduire un signal représentatif de dP et des moyens sensibles audit signal pour ajuster, pour au moins un injecteur sélectionné, un paramètre d'atomisation de l'alimentation pour obtenir un tel paramètre tombant dans une plage correspondant à un degré souhaité d'atomisation de l'alimentation passant par au moins le ou les injecteurs sélectionné(s).

**8.** FCCU selon la revendication 7 comprenant un moyen pour comparer ledit signal basé sur dP à un autre signal basé sur une valeur de consigne présélectionnée et pour ajuster ladite atomisation de manière à diminuer toute différence entre lesdits premier et deuxième signaux.

FIG. IA

EP 0 444 860 B1

FIG. 1B

FIG. 2

FIG. 3

FIG. 4

FIG. 5

FIG. 6

EP 0 444 860 B1

FIG. 7

FIG. 8

FIG. 9

F I G. 10

FCCU FEED CONTROL AND OPTIMIZATION ROUTINE

INPUT READING FROM PROCESS, RUN PLAN RELATED TARGETS

IS THIS AN INITIALIZATION PASS

YES → INITIALIZE FLAGS LIMITS, COUNTIES, INDEXES → EXIT

NO

ANY BAD INPUTS

YES → ISSUE ALARM MESSAGES → DEACTIVATE CONTROLLER → EXIT

NO

ARE CURRENT READING FOR TOTAL FEED TARGET INJECTOR ΔP AND "CF" ON TARGET (± TOLERANCE)

→ ISSUE STATUS OK MESSAGE → EXIT

FIG. IIA

EP 0 444 860 B1

FIG. 11B

EP 0 444 860 B1